# EUROPÄISCHE PATENTSCHRIFT

(11) **EP 3 068 679 B1**
(45) Veröffentlichungstag und Bekanntmachung des Hinweises auf die Patenterteilung: **01.07.2020**
(21) Anmeldenummer: 14802812.9
(22) Anmeldetag: 11.11.2014
(51) Int. Cl.: B62D 55/24

(54) **GUMMIBANDKETTENSEGMENT**
RUBBER BAND TRACK SEGMENT
SEGMENT DE CHENILLE CAOUTCHOUC

(30) Priorität: 16.11.2013 DE 102013019232
(43) Veröffentlichungstag der Anmeldung: 21.09.2016
(73) Patentinhaber: DST Defence Service Tracks GmbH, 66629 Freisen (DE)
(72) Erfinder: MÜLLER, Winfried, 42857 Remscheid (DE)
(74) Vertreter: Feder Walter Ebert
(86) Internationale Anmeldenummer: PCT/EP2014/003017
(87) Internationale Veröffentlichungsnummer: WO 2015/070974

(56) Entgegenhaltungen:
- WO-A1-2010/130367
- WO-A1-2012/142705

## Beschreibung

Die Erfindung betrifft ein Gummibandkettensegment gemäß dem Oberbegriff des Anspruchs 1. Ein solches Gummibandkettensegment ist aus der WO 2012/142705 A1 bekannt.

Die aus mehreren Gummibandkettensegmenten zusammengesetzte Gummibandkette der WO 2012/142705 A1 weist auf der Mittellängsachse ihrer inneren Radkontaktseite eine Vielzahl hintereinander angeordneter Führungshörner auf. Diese Führungshörner bilden einen quasi kontinuierlichen Wall, der in die im Antriebsrad, im Spannrad und in den Laufrädern ausgebildeten Hohlkehlen passt. Die Passung der Führungshörner zu den Hohlkehlen ermöglicht es, die Gleiskette während der Bewegung des Gummibandkettenfahrzeugs zu führen. Ferner weist die Gummibandkette der WO 2012/142705 A1 eine Vielzahl von Vorsprüngen auf, die als Traktionsnasen bezeichnet werden und entlang jeder Seite der Gummibandkette angeordnet sind. Diese Traktionsnasen sind so konzipiert, dass sie passend in entsprechende Hohlräume im Antriebsrad eingreifen. Sie gewährleisten so die Kraftübertragung vom Motor des Gummibandkettenfahrzeugs auf die Gummibandkette. Zwischen den Führungshörnem und den Traktionsnasen befindet sich eine ebene Lauffläche, auf welcher die Laufräder des Gummibandkettenfahrzeugs laufen und das Gewicht des Gummibandkettenfahrzeugs abstützen. Die Gummibandkettensegmente der WO 2012/142705 A1 sind mit Zugträgern verstärkte Segmente, welche jeweils an beiden Enden mit Schließstellen versehen sind. Durch diese Schließstellen ist die Kombination eines Segmentes mit anderen Segmenten möglich. Jedes Segment besteht aus sich abwechselnden flexiblen und weniger flexiblen Bereichen, wodurch einerseits die Flexibilität der Gummibandkette beim Umlauf und andererseits die Stabilität der Gummibandkette gewährleistet wird.

Aus der WO 2010/130367 A1 ist zudem eine Verbindungsvorrichtung für Bandkettensegmente bekannt, welche Rohrabschnitte von in die Bandkettensegmente eingelassenen Rohren umschließt. Zwischen den endseitig angeordneten Rohrabschnitten können dabei in einen Grundkörper des Bandkettensegments einvulkanisierte zugbelastbare Einlagen vorgesehen sein, welche die Rohre ringförmig oder schlaufenförmig umschlingen.

Die Schließstellen der Gummibandkette der WO 2012/142705 A1 können aus geometrischen Gründen nur innerhalb der weniger flexiblen Bereiche, den sogenannten Kettenkörpern, untergebracht werden, da die flexiblen Bereiche, die sogenannten Umlenkungen, nicht genug Platz bieten. Dies hat den Nachteil, dass die mittels Nippeln an die Schließstellen gekoppelten Zugträger nur über eine sehr geringe freie Seillänge bis zum ersten flexiblen Bereich, und damit zur Umlenkung, verfügen. Dies führt unter Kettenzug beim Umlaufen durch das Laufwerk auf Dauer zu einer Schädigung der Zugträger in der Nähe der Nippel und damit zu einem vorzeitigen Ausfall der Gummibandkette. Ein Kettenriss ist sicherheitsrelevant, da ein betroffenes Fahrzeug nicht mehr gesteuert und abgebremst werden kann.

Es ist daher Aufgabe der vorliegenden Erfindung, ein Gummibandkettensegment bereitzustellen, welches mit anderen Gummibandkettensegmenten oder mit sich selbst zu einer segmentierbaren Gummibandkette verbindbar ist und bei welchem die oben beschriebenen Nachteile beseitigt sind.

Diese Aufgabe wird durch das Gummibandkettensegment gemäß Anspruch 1 gelöst. Vorteilhafte Ausführungsformen dieses Gummibandkettensegments sind in den Unteransprüchen angegeben.

Der Begriff "Gummibandkettensegment" bzw. "Gummibandkette" ist im Rahmen der vorliegenden Erfindung nicht dahingehend als einschränkend zu verstehen, dass zwingend Gummi bei der Herstellung der erfindungsgemäßen Segmente zum Einsatz kommt. Vielmehr werden die Gummibandkettensegmente im Wesentlichen aus Polymer, vorzugsweise aus elastischen Materialien wie Kautschuk und/oder anderen Elastomeren, hergestellt. In diese Materialien sind zur strukturellen Verstärkung zusätzlich zu den Zugträgern vorzugsweise auch noch Einlagen aus Metall und/oder Gewebe eingearbeitet.

Erfindungsgemäß sind die Enden der Zugträger derart in den weniger flexiblen Bereichen an den Enden des Gummibandkettensegments positioniert, dass die Zugträger ab Austritt aus den Nippeln eine möglichst lange Strecke durch die weniger flexiblen Bereiche verlaufen, bevor sie durch die benachbarten flexiblen Bereiche verlaufen. Dadurch kann eine Schädigung der Zugträger im gefährdeten Austrittsbereich aus den Nippeln auf Dauer vermieden werden. Der Vorteil von an den Enden der Zugträger angeordneten Nippeln ist, dass sie zur Aufnahme in einer Hinterschneidung der Verbindungseinrichtungen geeignet sind. Durch die Anordnung von Nippeln an den Enden der Zugträger können somit nicht nur hohe Zugkräfte auf die Zugträger übertragen werden, sondern es kann auch eine ohne großen Aufwand reversible Verbindung von mehreren Gummibandkettensegmenten untereinander oder von zwei Enden eines Gummibandkettensegments gewährleistet werden, denn die Nippel können in ihrer hinterschneidenden Aufnahme verschiebbar angeordnet sein, so dass sie - nach Entfernen einer optionalen Sicherung gegen seitliches Herausrutschen im laufenden Betrieb der Gummibandkette - aus den Verbindungseinrichtungen seitlich herausgeschoben werden können.

Bei einer nicht dem Prinzip der Erfindung entsprechenden Verwendung von Zugträgern, welche schlaufenförmig um Stangen oder Rohre als Verbindungseinrichtung herumgelegt sind, ist eine derartige reversible Verbindung nicht realisierbar, denn das von den Zugträgern umschlungene Rohr muss in das Gummibandkettensegment einvulkanisiert werden. Vorteilhaft bei schlaufenförmig um Stangen oder Rohre herumgelegten Zugträgern ist jedoch, dass es nicht wie bei der Verwendung von Nippeln an den Enden von Zugträgern zur Ausbildung von gefährdeten Austrittsbereichen der Zugträger aus den Nippeln kommt, denn die Schlaufenenden laufen mehr oder weniger tangential aus dem am Rohr anliegenden Schlaufenbogen aus, so dass keine Umbiegungen der Zugträger um harte Kanten existieren.

Vorzugsweise sind die Nippel an die Enden der Zugträger angegossen, angeschmiedet, angepresst oder angeklebt. Die Nippel können aus metallischem und/oder polymerem Material bestehen. Vorzugsweise sind die Nippel derart scheibenförmig ausgestaltet, dass deren Dicke nur geringfügig über dem Durchmesser der Zugträger liegt. Dadurch können besonders viele Zugträger nebeneinander in der Bandebene angeordnet werden.

Vorzugsweise sind die Zugträger seilförmig ausgestaltet, insbesondere können die Zugträger unter Verwendung von Stahlseilen realisiert werden. Stahlseilarmierungen können besonders hohe Zugkräfte aufnehmen. Es ist aber auch der Einsatz von hochbelastbaren Gewebebändern denkbar. Vorzugsweise übersteigt die Ablösekraft der Nippel von ihrem Stahlseil die Bruchkraft des Stahlseils. Dadurch kann gewährleistet werden, dass die Gesamtbelastbarkeit des Gummibandkettensegments durch die Zugbeanspruchbarkeit der Stahlseile definiert ist, welche in der Regel aus einschlägigen Tabellen leicht zu ermitteln ist.

Vorzugsweise sind die Verbindungseinrichtungen an der der Seite des Austritts der Zugträger abgewandten Seite derart ausgestaltet, dass durch Kopplung der Verbindungseinrichtungen zweier Enden eines oder zweier Gummibandkettensegmente eine Schließstelle gebildet wird, welche so dimensioniert ist, dass sie zumindest geometrisch, vorzugsweise auch massenmäßig, mit den flexiblen Bereichen des Gummibandkettensegments übereinstimmt. Dadurch kann ein homogener und ruhiger Kettenlauf beim Umlaufen durch das Laufwerk erreicht werden. Dabei bilden entweder die Verbindungseinrichtungen selbst die Schließstelle oder die Verbindungseinrichtungen sind über ein Koppelteil zur Schließstelle ergänzbar.

Gemäß einer bevorzugten Ausführungsform der vorliegenden Erfindung ist die Ausdehnung in Längsrichtung der Gummibandkette der weniger flexiblen Bereiche an den Enden des Gummibandkettensegments so bemessen, dass zur Reduzierung der Bruchgefahr der Zugträger im Bereich der Enden der Zugträger ein Verlauf der Zugträger durch die weniger flexiblen Bereiche ab Austritt aus den Nippeln von mindestens dem 20-fachen des Zugträgerdurchmessers gewährleistet ist, bevor die Zugträger durch die benachbarten flexiblen Bereiche verlaufen. Dadurch kann einerseits die Ermüdungsbruchgefahr der Zugträger im gefährdeten Austrittsbereich aus den Nippeln bereits signifikant gesenkt werden, andererseits kann durch die begrenzte Längsausdehnung der weniger flexiblen Bereiche eine hohe Feingliedrigkeit und eine hohe Flexibilität der Gummibandkette beim Umlauf gewährleistet werden.

Vorzugsweise ist ein Verlauf der Zugträger durch die weniger flexiblen Bereiche ab Austritt aus den Nippeln von mindestens dem 25-fachen des Zugträgerdurchmessers gewährleistet. Dadurch kann die Ermüdungsbruchgefahr der Zugträger weiter gesenkt werden.

Gemäß einer besonders bevorzugten Ausführungsform der vorliegenden Erfindung ist ein Verlauf der Zugträger durch die weniger flexiblen Bereiche ab Austritt aus den Nippeln von mindestens dem 30-fachen des Zugträgerdurchmessers gewährleistet. Dadurch wird die Ermüdungsbruchgefahr der Zugträger im Nahbereich des Austritts aus den Nippeln auf ein Minimum reduziert, und zwar minimiert auf die Ermüdungsbruchgefahr der Zugträger im endfernen Seilbereich.

Vorzugsweise ist das Gummibandkettensegment geeignet, über ein Antriebsrad und über Laufräder eines Bandkettenfahrzeugs zu laufen, wobei das Gummibandkettensegment eine äußere Bodenkontaktseite und eine innere Radkontaktseite aufweist, wobei die innere Radkontaktseite eine ebene Fläche aufweist, aus der mehrere Führungshörner zur Führung der Gummibandkette während der Bewegung des Bandkettenfahrzeugs herausragen, wobei zumindest Teile der ebenen Fläche als Lauffläche für die Laufräder dienen, und wobei in der ebenen Fläche Vertiefungen für den Eingriff von Antriebsnasen des Antriebsrades vorgesehen sind. Dadurch kann auf die bisher üblichen Traktionsnasen verzichtet werden. Dies führt zu einer Gewichtseinsparung und damit zu einer leichteren, agileren Kette, welche daher leichter beschleunigt werden kann. Gerade beim Anfahren und beim Abbremsen des Badkettenfahrzeugs stellt dies einen großen Vorteil gegenüber einer konventionellen Gummibandkette mit Traktionsnasen dar.

Gemäß einer bevorzugten Ausführungsform weist die Gummibandkette bzw. das Gummibandkettensegment Vertiefungen in Form von Löchern auf. Das bedeutet, dass die Vertiefungen die Gummibandkette von der Radkontaktseite bis zur Bodenkontaktseite durchdringen. Die Ausbildung der Vertiefungen in Form von Löchern hat den Vorteil, dass relativ groß oder hoch ausgestaltete Antriebsnasen des Antriebsrades besonders tief in die ebene Fläche auf der inneren Radkontaktseite der Gummibandkette eingreifen können. Dies ist insbesondere beim Anfahren und starken Beschleunigen des Bandkettenfahrzeugs von Vorteil, da durch einen solchen tiefen Eingriff ein hohes Drehmoment vom Antriebsrad auf die Gummibandkette übertragen werden kann.

Es kann aber auch vorteilhaft sein, wenn die Gummibandkette nur Vertiefungen aufweist, welche von der Radkontaktseite nicht bis zur Bodenkontaktseite durchdringen. Dies hat den Vorteil einer hohen Strukturfestigkeit der Gummibandkette. Besonders vorteilhaft ist es jedoch, wenn die Gummibandkette sowohl Vertiefungen in Form von Löchern aufweist als auch Vertiefungen aufweist, welche von der Radkontaktseite nicht bis zur Bodenkontaktseite durchdringen. Dadurch kann sowohl eine hohe Drehmomentübertragung als auch eine hohe strukturelle Festigkeit der Gummibandkette erreicht werden. Ferner unterstützen die nichtdurchdringenden Vertiefungen in Verbindung mit kleineren oder niedrigeren Antriebsnasen des Antriebsrades gerade bei schnellerer Fahrt (ohne größere Beschleunigungen) in wirkungsvollerweise den Vortrieb des Bandkettenfahrzeugs.

Vorzugsweise weisen die nicht bis zur Bodenkontaktseite durchdringenden Vertiefungen die Form von Kanälen auf, welche zumindest eine Richtungskomponente senkrecht zur Längsachse der Gummibandkette aufweisen. Die Kanäle sind also schräg zur Längsachse der Gummibandkette orientiert. Besonders vorteilhaft ist es, wenn die Kanäle senkrecht zur Längsachse der Gummibandkette orientiert sind, da in diesem Fall die Kraftübertragung auf die Gummibandkette maximal ist.

Die Kanäle können über einen Teil oder Teile der gesamten Breite der Gummibandkette verlaufen. Besonders vorteilhaft ist es jedoch, wenn die Kanäle zwischen den Führungshörnern hindurch über die gesamte Breite der Gummibandkette verlaufen. Dadurch kann zum einen über entsprechend breite, in die Kanäle eingreifende Antriebsnasen des Antriebsrades die Antriebskraft auf die gesamte Breite der Gummibandkette verteilt werden, was gerade beim Anfahren und Beschleunigen zur Schlupfvermeidung beiträgt. Zum anderen wird darüberhinaus aber auch noch eine andere positive Synergiewirkung erzielt, denn im Bereich der Kanäle wird die Gummibandkette dünner, was zu einer leichteren Biegbarkeit der Gummibandkette im Bereich der Kanäle führt. Dadurch kann die Gummibandkette ohne großen Wiederstand leichter über das Antriebsrad und das Spannrad laufen, wo der Umlenkwinkel der Gummibandkette am größten ist.

Gemäß einer besonders bevorzugten Ausführungsform der Erfindung ist/sind ein oder mehrere Löcher auf Höhe des Zwischenraums zwischen zwei Führungshörnern auf der einen Seite neben der Mittellängsachse der Gummibandkette über einen der oben beschriebenen Kanäle mit einem oder mehreren Löchern auf Höhe des Zwischenraums zwischen diesen zwei Führungshörnern auf der anderen Seite neben der Mittellängsachse der Gummibandkette verbunden. Dadurch, dass die Löcher mit den Kanälen auf einer Linie liegen, wird die Biegsamkeit der Kette in diesem Bereich noch weiter erhöht, so dass sich neben der hohen Agilität der Gummibandkette aufgrund Gewichtseinsparung auch eine optimale Abrollbarkeit der Gummibandkette über Antriebsrad und Spannrolle ergibt.

Vorzugsweise sind zwischen den Löchern parallel zur Mittellängsachse der Gummibandkette Metallbänder in die ebene Fläche und in die Lochwandung eingearbeitet. Durch diese Maßnahme kann die Standzeit der Gummibandkette signifikant erhöht werden, da die Belastung der Oberflächen im Eingriffsbereich der längeren, in die Löcher eingreifenden Antriebsnasen des Antriebsrades aufgrund der besonders starken Drehmomentbelastung besonders hoch ist.

Auf der äußeren Bodenkontaktseite der Gummibandkette sind vorzugsweise Laufnocken oder Laufrippen angeordnet, welche je nach Form für die Traktion zwischen Gummibankette und Untergrund und/oder zur Schonung der Untergrundoberfläche (Fahrbahn) optimiert sein können.

Ferner ist es von Vorteil, wenn die zur Fahrzeuglängsachse hinweisende seitliche Flanke der Führungshörner im oberen Bereich vorne und/oder hinten abgeschrägt ist. Dadurch kann die Tendenz der Gummibandkette abzuspringen, wenn Querkräfte auf die Laufräder wirken (also insbesondere bei schneller Kurvenfahrt), verringert werden.

Weitere vorteilhafte Ausführungsformen und Verbesserungen der Erfindung ergeben sich aus nachstehender Beschreibung von bevorzugten Realisierungsbeispielen der Erfindung. Es wird darauf hingewiesen, dass die Erfindung auch weitere Ausführungsformen umfasst, die sich aus einer Kombination von Merkmalen ergeben, die getrennt in den Patentansprüchen und/oder in der Beschreibung und den Figuren aufgeführt sind.

Nachstehend wird die Erfindung anhand ihrer vorteilhaften Ausführungsformen unter Bezugnahme auf die Zeichnungen näher erläutert.

In den Zeichnungen zeigen:
- Figur 1: eine Schnittansicht durch eine Gummibandkette mit Zugträgern gemäß dem Stand der Technik,
- Figur 2: eine Gummibandkette mit einem einzigen Gummibandkettensegment gemäß vorliegender Erfindung, wobei die beiden Verbindungseinrichtungen des Gummibandkettensegments miteinander verbunden sind, so dass eine geschlossene Gummibandkette entsteht,
- Figur 3: eine Gummibandkette mit mehreren Gummibandkettensegmenten gemäß vorliegender Erfindung, wobei jede Verbindungseinrichtung eines Gummibandkettensegments mit einer Verbindungseinrichtung eines anderen Gummibandkettensegments verbunden ist, so dass die Gummibandkettensegmente zu einer geschlossenen Kette verbunden sind,
- Figur 4: eine Seitenansicht des Einsatzes einer erfindungsgemäßen Gummibandkette an einem Bandkettenfahrzeug mit Antriebsrad, Laufrädern und Spannrolle,
- Figur 5: eine Schnittansicht einer Verbindungsstelle zwischen zwei erfindungsgemäßen Gummibandkettensegmenten,
- Figur 6: einen Längsschnitt einer bevorzugten Ausführungsform der erfindungsgemäßen Gummibandkette,
- Figur 7: eine Aufsicht und teilweise Schnittansicht auf die Bodenkontaktseite einer bevorzugten Ausführungsform der erfindungsgemäßen Gummibandkette,
- Figur 8: eine Aufsicht auf die Radkontaktseite der Ausführungsform in Figur 7,
- Figur 9: eine bevorzugte Art der Verbindung der Enden erfindungsgemäßer Gummibandkettensegmente, und
- Figur 10: eine weitere bevorzugte Art der Verbindung der Enden von erfindungsgemäßen Gummibandkettensegmenten.

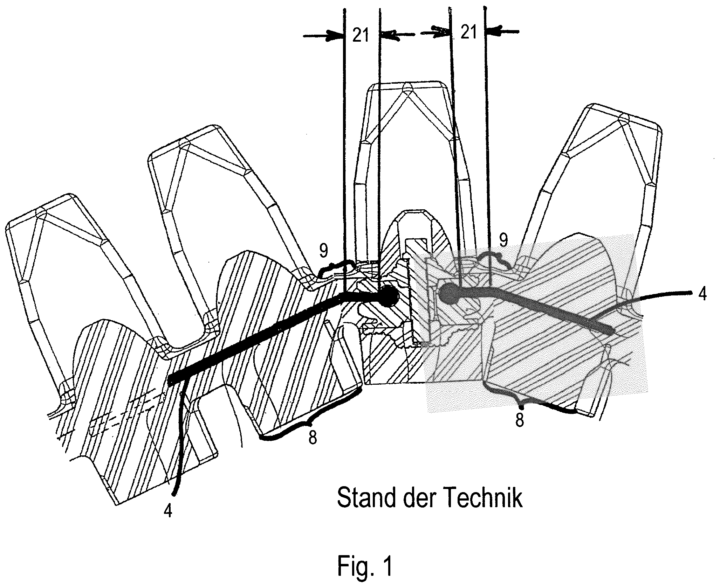

Figur 1 zeigt eine Schnittansicht durch eine Gummibandkette gemäß dem Stand der Technik, wie sie im einleitenden Teil dieser Beschreibung im Zusammenhang mit der WO 2012/142705 A1 beschrieben ist. Die Schließstellen dieser konventionellen Gummibandkette sind innerhalb der weniger flexiblen Bereiche 8, den sogenannten Kettenkörpern, untergebracht, da die flexiblen Bereiche 9, die sogenannten Umlenkungen, nicht genug Platz bieten. Hierbei tritt der Nachteil auf, dass die mittels Nippeln an die Schließstellen gekoppelten Zugträger 4 nur über eine sehr geringe freie Seillänge 21 bis zum ersten flexiblen Bereich 9, und damit zur Umlenkung, verfügen. Dies führt unter Kettenzug beim Umlaufen durch das Laufwerk des Bandkettenfahrzeugs auf Dauer zu einer Schädigung der Zugträger 4 in der Nähe der Nippel und damit zu einem vorzeitigen Ausfall der Gummibandkette.

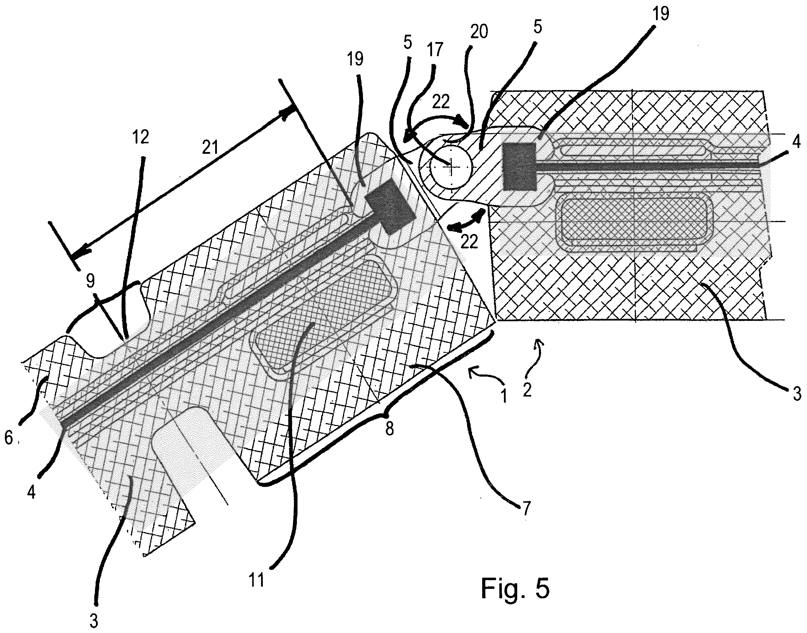

Figur 5 zeigt die Verbindung der Enden zweier Gummibandkettensegmente 1, 2 gemäß vorliegender Erfindung. Zur Erhöhung der Zugbelastbarkeit sind Zugträger 4 zwischen den Verbindungseinrichtungen 5 in die Gummibandkettensegmente 1, 2 eingebracht. Jedes der Gummibandkettensegmente 1, 2 weist abwechselnd flexible Bereiche 9 und weniger flexible Bereiche 8 auf. Die geringere Flexibilität der Bereiche 8 ergibt sich in erster Linie aus der gegenüber den flexiblen Bereichen 9 größeren Materialstärke, aber auch aus der Verstärkung mittels in Querrichtung eingebrachter Traversen 11. Mit Flexibilität im Sinne der vorliegenden Anmeldung ist insbesondere die Biegbarkeit der entsprechenden Bereiche 8, 9 um eine Achse senkrecht zur Längsachse der Gummibandkette, also um eine Achse senkrecht zur Zeichenebene der Figur 5 gemeint. Erfindungsgemäß sind die Enden der Zugträger 4 derart in den weniger flexiblen Bereichen 8 an den Enden der Gummibandkettensegmente 1, 2 positioniert, dass die Zugträger 4 ab Austritt 19 aus den Verbindungseinrichtungen 5 eine möglichst lange Strecke 21 durch die weniger flexiblen Bereiche 8 verlaufen, bevor sie durch die benachbarten flexiblen Bereiche 9 verlaufen.

Dabei ist vorzugsweise die Ausdehnung in Längsrichtung der Gummibandkette 3 der weniger flexiblen Bereiche 8 an den Enden der Gummibandkettensegmente 1, 2 so bemessen, dass im Bereich der Enden der Zugträger 4 ein Verlauf der Zugträger 4 durch die weniger flexiblen Bereiche 8 ab Austritt 19 aus den Verbindungseinrichtungen 5 von mindestens dem 20-fachen des Zugträgerdurchmessers gewährleistet ist, bevor die Zugträger 4 durch die benachbarten flexiblen Bereiche 9 verlaufen. Besonders bevorzugt ist es, wenn die freie Seillänge 21 der Zugträger 4 ab Austritt 19 aus den Verbindungseinrichtungen 5 durch die weniger flexiblen Bereiche 8 mindestens das 25-fache des Zugträgerdurchmessers beträgt. Optimal ist, wenn ein Verlauf der Zugträger 4 durch die weniger flexiblen Bereiche 8 ab Austritt 19 aus den Verbindungseinrichtungen 5 von mindestens dem 30-fachen des Zugträgerdurchmessers gewährleistet ist.

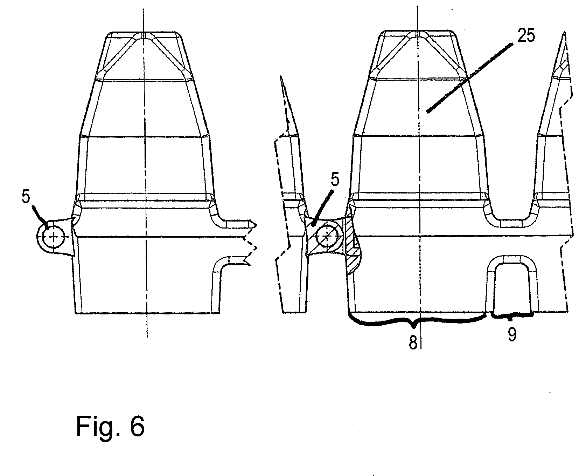

Die Verbindungseinrichtungen 5 an der der Seite des Austritts der Zugträger 4 abgewandten Seite ist derart ausgestaltet, dass durch Kopplung der Verbindungseinrichtungen 5 zweier Enden eines oder zweier Gummibandkettensegmente 1, 2 eine Schließstelle 5, 17, 18 gebildet wird, welche so dimensioniert ist, dass sie zumindest geometrisch, vorzugsweise auch massenmäßig, mit den flexiblen Bereichen 8 der Gummibandkettensegmente 1, 2 übereinstimmt, wie diese besonders deutlich aus einer Zusammenschau der Figuren 5 und 6 hervorgeht.

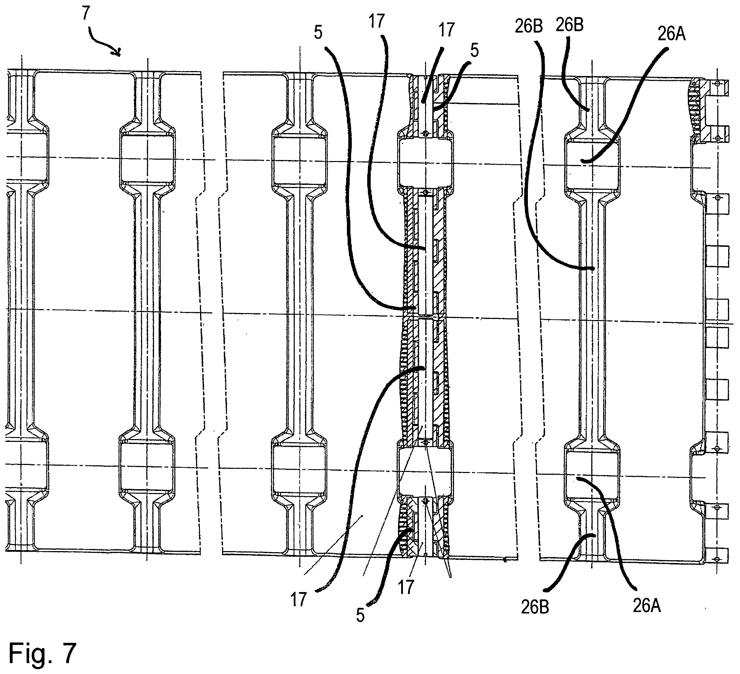

Dabei ist es zum einen möglich, dass die Verbindungseinrichtungen 5 (zusammen mit einem oder mehreren Bolzen 17) selbst die Schließstelle 5, 17 bilden, wie dies in Figuren 5 und 7 dargestellt ist (Prinzip der sogenannten Scharnierkette).

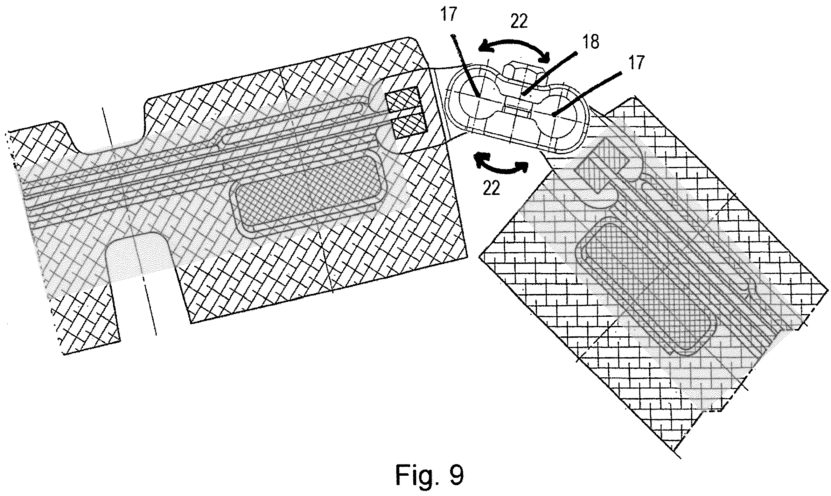

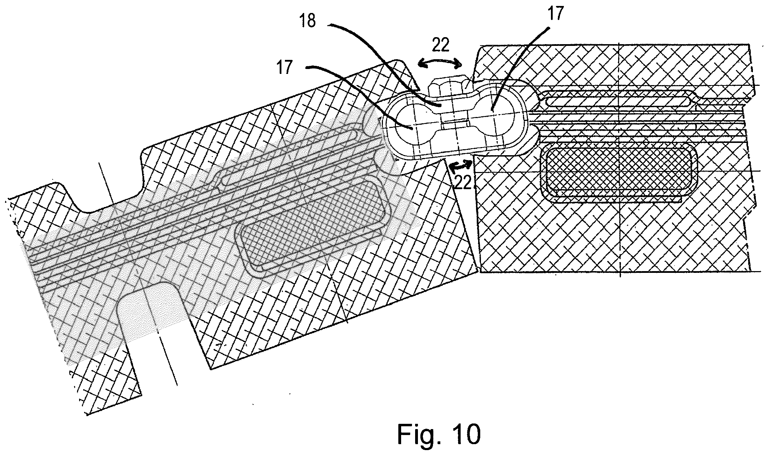

Zum anderen ist es aber auch möglich, dass die Verbindungseinrichtungen 5 (zusammen mit mindestens zwei zueinander parallelen Bolzen 17) über ein Koppelteil 18 (einen sogenannten Verbinder) zur Schließstelle 5, 17, 18 ergänzbar sind, wie dies in Figuren 9 und 10 dargestellt ist (Prinzip der sogenannten Verbinderkette).

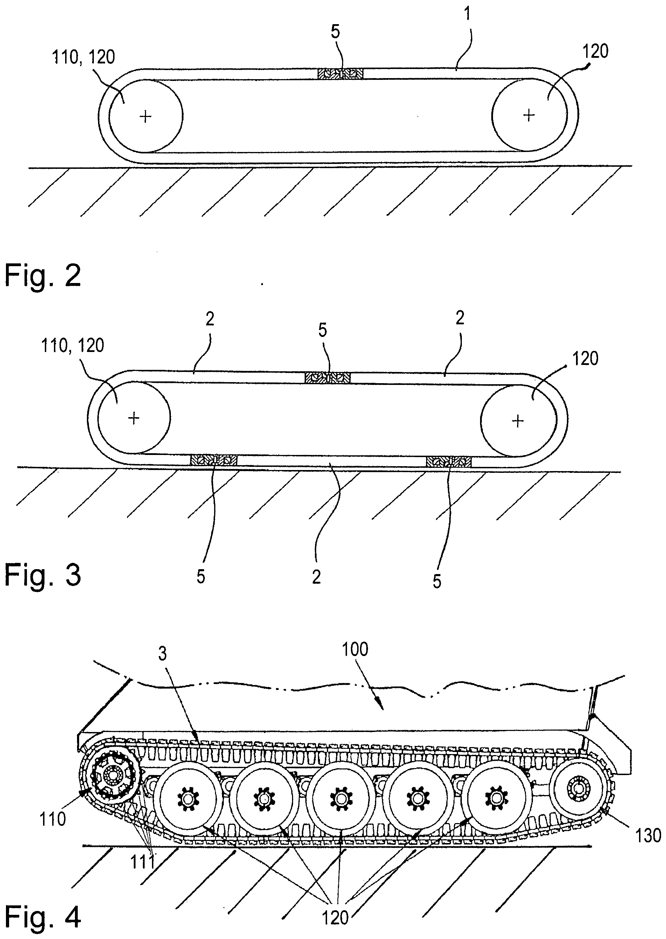

Figur 4 zeigt eine erfindungsgemäße Gummibandkette 3 im Einsatz an einem Bandkettenfahrzeug 100. Die Gummibandkette 3 ist dazu eingerichtet, über ein Antriebsrad 110, über Laufräder 120 und ein Spannrad 130 zu laufen. Figur 2 zeigt eine Gummibandkette 3 mit einem einzigen Gummibandkettensegment 1 gemäß vorliegender Erfindung, wobei die beiden Verbindungseinrichtungen 5 des Gummibandkettensegments 1 miteinander verbunden sind, so dass eine geschlossene Gummibandkette 3 entsteht. Figur 3 zeigt eine Gummibandkette 3 mit mehreren Gummibandkettensegmenten 2 gemäß vorliegender Erfindung, wobei jede Verbindungseinrichtung 5 eines Gummibandkettensegments 2 mit einer Verbindungseinrichtung 5 eines anderen Gummibandkettensegments 2 verbunden ist, so dass die Gummibandkettesegmente 2 zu einer geschlossenen Kette 3 verbunden sind.

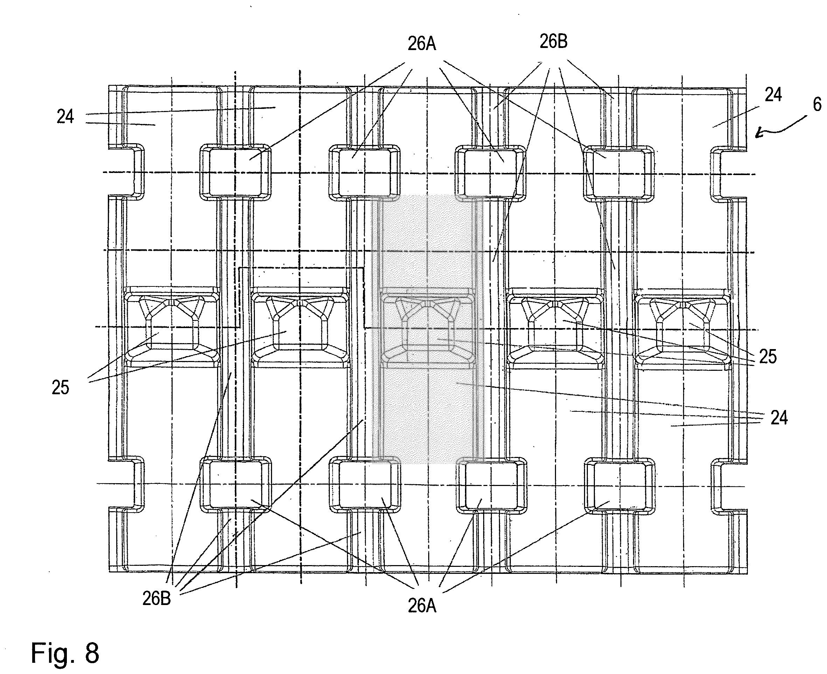

Wie den Figuren 7 und 8 zu entnehmen ist, weist die Gummibandkette 3 oder das Gummibandkettensegment 1, 2 eine äußere Bodenkontaktseite 7 und eine innere Radkontaktseite 6 auf. Die innere Radkontaktseite 6 weist eine ebene Fläche 24 auf, aus der mehrere Führungshörner 25 zur Führung der Gummibandkette 3 während der Bewegung des Bandkettenfahrzeugs 100 herausragen. Zumindest Teile der ebenen Fläche 24 dienen als Lauffläche für die Laufräder 120. In der ebenen Fläche 24 sind Vertiefungen 26; 26A, 26B für den Eingriff von Antriebsnasen 111 des Antriebsrades 110 vorgesehen.

Die Führungshörner 25 sind auf der Mittellängsachse der Gummibandkette 3 oder des Gummibandkettensegments 1, 2 angeordnet. Die ebene Fläche 24 erstreckt sich über die gesamte Breite des Gummibandkettensegments 1, 2 bzw. der Gummibandkette 3.

Die Gummibandkette 3 der Figuren 7 und 8 weist Vertiefungen in Form von Löchern 26A auf, welche die Gummibandkette 3 von der Radkontaktseite 6 bis zur Bodenkontaktseite 7 durchdringen. Die Löcher 26A weisen in der Draufsicht einen im Wesentlichen rechteckigen Querschnitt auf. Die senkrecht zur Mittellängsachse der Gummibandkette 3 verlaufenden Lochränder sind angeschrägt, so dass die Antriebsnasen 111 des Antriebsrades 110 während des Abrollvorganges der Gummibandkette 3 am Antriebsrad 110 in die Löcher 26A eingreifen können.

Ferner weist das Gummibandkettensegment 1, 2 Vertiefungen 26B auf, welche von der Radkontaktseite 6 nicht bis zur Bodenkontaktseite 7 durchdringen. Diese Vertiefungen 26B weisen die Form von Kanälen auf, welche senkrecht zur Längsachse des Gummibandkettensegments 1, 2 orientiert sind. Die Kanäle 26B verlaufen zwischen den Führungshörnern 25 hindurch über die gesamte Breite des Gummibandkettensegments 1, 2. Dabei ist jeweils ein Loch 26A auf Höhe des Zwischenraums zwischen zwei Führungshörnern 25 auf der einen Seite neben der Mittellängsachse des Gummibandkettensegments 1, 2 über einen Kanal 26B mit jeweils einem Loch 26A auf Höhe des Zwischenraums zwischen diesen zwei Führungshörnern 25 auf der anderen Seite neben der Mittellängsachse des Gummibandkettensegments 1, 2 verbunden. Es ist aber auch möglich, dass zwei oder mehr Löcher 26A auf Höhe des Zwischenraums zwischen zwei Führungshörnern 25 auf einer Seite neben der Mittellängsachse des Gummibandkettensegments 1, 2 angeordnet sind, und diese Löcher 26A in einer Flucht mit dem Kanal 26B liegen. Ferner ist es auch möglich, dass die Löcher 26A nicht auf Höhe des Zwischenraums zwischen zwei Führungshörnern 25 liegen, sondern zwischen den Kanälen 26B auf Höhe der Führungshörner 25 angeordnet sind. Es ist auch eine Kombination dieser beiden Anordnungsmöglichkeiten der Löcher 26A möglich, wobei es dann von Vorteil ist, wenn die Löcher 26A auf Höhe der Zwischenräume zwischen zwei Führungshörnern 25 und die Löcher 26A auf Höhe der Führungshörner 25 seitlich zueinander versetzt angeordnet sind.

Auf der äußeren Bodenkontaktseite 7 sind Laufrippen angeordnet, welche zur Traktionsverbesserung und/oder Untergrundoberflächenschonung optimiert sind. Das Gummibandkettensegment 1, 2 ist im Wesentlichen aus Polymer, vorzugsweise aus elastischen Materialien wie Kautschuk und/oder anderen Elastomeren hergestellt. In das Gummibandkettensegment 1, 2 sind zur strukturellen Verstärkung Einlagen 29 aus Metall und/oder Gewebe eingearbeitet. Die Einlagen bzw. Verstärkungsmittel 29 können die Form von Kabeln, Fasern, Blechen und/oder anderen Formteilen aufweisen.

Wie den Figuren 6 und 8 zu entnehmen ist, kann die zur Fahrzeuglängsachse hinweisende seitliche Flanke der Führungshörner 25 im oberen Bereich vorne und/oder hinten abgeschrägt sein.
Die oben beschriebenen Kanäle 26B können, aber müssen nicht vollständig für den Antrieb benützt werden, sowohl was die Anzahl der Kanäle als auch deren Länge anbelangt. So können einzelne Kanäle komplett aus dem Antriebskonzept herausgelassen werden, bei anderen Kanälen 26B wiederum kann z. B. nur der innere Teil (zwischen Loch 26A und Führungshorn 25) oder nur der äußere Teil (vom Loch 26A hin zum äußeren Rand des Gummibandkettensegments 1, 2) zum Antrieb verwendet werden.

Auch wenn die voranstehende Darstellung nicht auf den vollständigen Verzicht auf Traktionsnasen auf der inneren Radkontaktseite 6 der Gummibandkette 3 beschränkt ist, so bleibt doch festzustellen, dass die hier beschriebene Gummibandkette 3 bzw. das Gummibandkettensegment 1, 2 auch ohne jegliche Traktionsnasen oder andere Vorsprünge aus der Laufläche auskommt.

### Bezugszeichenliste

- 1: Gummibandkettensegment
- 2: Gummibandkettensegment
- 3: Gummibandkette
- 4: Zugträger
- 5: Verbindungseinrichtung
- 6: innere Radkontaktseite (von 1, 2, 3)
- 7: äußere Bodenkontaktseite (von 1, 2, 3)
- 8: weniger flexibler Bereich (von 1, 2, 3)
- 9: flexibler Bereich (von 1, 2, 3)
- 11: Traverse (in 1, 2, 3)
- 17: Bolzen (für 5)
- 18: Koppelteil
- 19: Austritt aus Verbindungseinrichtung (von 4)
- 21: Strecke durch weniger flexiblen Bereich (von 4)
- 24: ebene Fläche (von 6)
- 25: Führungshorn
- 26: Vertiefung (in 24)
- 26A: Loch (in 24)
- 26B: Kanal (in 24)
- 29: Einlage (in 1, 2, 3)
- 100: Bandkettenfahrzeug
- 110: Antriebsrad
- 111: Antriebsnase
- 120: Laufrad
- 130: Spannrad

## Patentansprüche

1. Gummibandkettensegment (1, 2), welches über Verbindungseinrichtungen (5) an seinen Enden mit anderen Gummibandkettensegmenten (2) oder mit sich selbst (1) zu einer segmentierbaren Gummibandkette (3) verbindbar ist, wobei zur Erhöhung der Zugbelastbarkeit ein oder mehrere Zugträger (4) zwischen den Verbindungseinrichtungen (5) in das Gummibandkettensegment (1, 2) eingebracht sind, **dadurch gekennzeichnet, dass** an den Enden der Zugträger (4) Nippel angeordnet sind, welche zur Aufnahme in einer Hinterschneidung der Verbindungseinrichtungen (5) eingerichtet sind, wobei das Gummibandkettensegment (1, 2) abwechselnd flexible Bereiche (9) und weniger flexible Bereiche (8) aufweist, wobei die Enden der Zugträger (4) derart in den weniger flexiblen Bereichen (8) an den Enden des Gummibandkettensegments (1, 2) positioniert sind, dass die Zugträger (4) ab Austritt (19) aus den Nippeln eine möglichst lange Strecke (21) durch die weniger flexiblen Bereiche (8) verlaufen, bevor sie durch die benachbarten flexiblen Bereiche (9) verlaufen.

2. Gummibandkettensegment nach Anspruch 1, wobei die Nippel an die Enden der Zugträger (4) angegossen, angeschmiedet, angepresst oder angeklebt sind.

3. Gummibandkettensegment nach Anspruch 1 oder 2, wobei die Nippel derart scheibenförmig ausgestaltet sind, dass deren Dicke nur geringfügig über dem Durchmesser der Zugträger (4) liegt.

4. Gummibandkettensegment nach einem der Ansprüche 1 bis 3, wobei die Verbindungseinrichtungen (5) an der der Seite des Austritts der Zugträger (4) abgewandten Seite derart ausgestaltet sind, dass durch Kopplung der Verbindungseinrichtungen (5) zweier Enden eines (1) oder zweier Gummibandkettensegmente (2) eine Schließstelle (5, 17, 18) gebildet wird, welche so dimensioniert ist, dass sie zumindest geometrisch, vorzugsweise auch massenmäßig, mit den flexiblen Bereichen (8) des Gummibandkettensegments (1, 2) übereinstimmt.

5. Gummibandkettensegment nach Anspruch 4, wobei die Verbindungseinrichtungen (5) entweder selbst die Schließstelle (5, 17) bilden oder die Verbindungseinrichtungen (5) über ein Koppelteil (18) zur Schließstelle (5, 17, 18) ergänzbar sind.

6. Gummibandkettensegment nach einem der vorangehenden Ansprüche, wobei die Ausdehnung in Längsrichtung der Gummibandkette (3) der weniger flexiblen Bereiche (8) an den Enden des Gummibandkettensegments (1, 2) so bemessen ist, dass zur Reduzierung der Bruchgefahr der Zugträger (4) im Bereich des Austritts (19) der Zugträger (4) aus den Nippeln ein Verlauf der Zugträger (4) durch die weniger flexiblen Bereiche (8) ab Austritt (19) aus den Nippeln von mindestens dem 20-fachen des Zugträgerdurchmessers gewährleistet ist, bevor die Zugträger (4) durch die benachbarten flexiblen Bereiche (9) verlaufen.

7. Gummibandkettensegment nach Anspruch 6, wobei ein Verlauf der Zugträger (4) durch die weniger flexiblen Bereiche (8) ab Austritt (19) aus den Nippeln von mindestens dem 25-fachen des Zugträgerdurchmessers gewährleistet ist.

8. Gummibandkettensegment nach Anspruch 7, wobei ein Verlauf der Zugträger (4) durch die weniger flexiblen Bereiche (8) ab Austritt (19) aus den Nippeln von mindestens dem 30-fachen des Zugträgerdurchmessers gewährleistet ist.

9. Gummibandkettensegment nach einem der vorangehenden Ansprüche, welches geeignet ist, über ein Antriebsrad (110) und über Laufräder (120) eines Bandkettenfahrzeugs (100) zu laufen, wobei das Gummibandkettensegment (1, 2) eine äußere Bodenkontaktseite (7) und eine innere Radkontaktseite (6) aufweist, wobei die innere Radkontaktseite (6) eine ebene Fläche (24) aufweist, aus der mehrere Führungshörner (25) zur Führung der Gummibandkette (3) während der Bewegung des Bandkettenfahrzeugs (100) herausragen, wobei zumindest Teile der ebenen Fläche (24) als Lauffläche für die Laufräder (120) dienen, wobei in der ebenen Fläche (24) Vertiefungen (26; 26A, 26B) für den Eingriff von Antriebsnasen (111) des Antriebsrades (110) vorgesehen sind.

10. Gummibandkettensegment nach Anspruch 9, wobei sich die ebene Fläche (24) über die gesamte Breite des Gummibandkettensegments (1, 2) erstreckt.

11. Gummibandkettensegment nach Anspruch 9 oder 10, wobei das Gummibandkettensegment (1, 2) Vertiefungen in Form von Löchern (26A) aufweist, welche das Gummibandkettensegment (1, 2) von der Radkontaktseite (6) bis zur Bodenkontaktseite (7) durchdringen.

12. Gummibandkettensegment nach einem der Ansprüche 9 bis 11, wobei das Gummibandkettensegment (1, 2) Vertiefungen (26B) aufweist, welche von der Radkontaktseite (6) nicht bis zur Bodenkontaktseite (7) durchdringen.

13. Gummibandkettensegment nach Anspruch 12, wobei die Vertiefungen (26B) die Form von Kanälen aufweisen, welche senkrecht zur Längsachse des Gummibandkettensegments (1, 2) orientiert sind.

14. Gummibandkettensegment nach Anspruch 13, wobei die Kanäle (26B) zwischen den Führungshörnern (5) hindurch über die gesamte Breite des Gummibandkettensegments (1, 2) verlaufen.

15. Gummibandkettensegment nach Ansprüchen 11 und 14, wobei ein oder mehrere Löcher (26A) auf Höhe des Zwischenraums zwischen zwei Führungshörnern (25) auf der einen Seite neben der Mittellängsachse des Gummibandkettensegments (1, 2) über einen der Kanäle (26B) mit einem oder mehreren Löchern (26A) auf Höhe des Zwischenraums zwischen diesen zwei Führungshörnern (25) auf der anderen Seite neben der Mittellängsachse des Gummibandkettensegments (1, 2) verbunden sind.

## Claims

1. Rubber track chain segment (1, 2) which is connectable by way of connecting devices (5) at its ends to other rubber track chain segments (2) or to itself (1) in order to form a segmentable rubber track chain (3), wherein, in order to increase the tensile load capacity, one or more tensile members (4) are incorporated into the rubber track chain segment (1, 2) between the connecting devices (5), **characterized in that**, on the ends of the tensile members (4), there are arranged nipples which are designed for being received in an undercut of the connecting devices (5), wherein the rubber track chain segment (1, 2) alternately has flexible regions (9) and less flexible regions (8),
wherein
the ends of the tensile members (4) are positioned in the less flexible regions (8) at the ends of the rubber track chain segment (1, 2) in such a way that the tensile members (4), proceeding from an exit (19) from the nipples, run over as great as possible a distance (21) through the less flexible regions (8) before running through the adjacent flexible regions (9).

2. Rubber track chain segment according to Claim 1,
wherein the nipples are cast, forged, pressed or adhesively bonded onto the ends of the tensile members (4).

3. Rubber track chain segment according to Claim 1 or 2,
wherein the nipples are of disc-shaped form such that the thickness thereof is only slightly greater than the diameter of the tensile members (4).

4. Rubber track chain segment according to one of Claims 1 to 3,
wherein the connecting devices (5) are, on the side averted from the side of the exit of the tensile members (4), designed such that, by virtue of the connecting devices (5) of two ends of one (1) or two rubber track chain segments (2) being coupled, a closure point (5, 17, 18) is formed which is dimensioned so as to correspond at least geometrically, preferably also in terms of measurements, to the flexible regions (8) of the rubber track chain segment (1, 2).

5. Rubber track chain segment according to Claim 4,
wherein either the connecting devices (5) themselves form the closure point (5, 17), or the connecting devices (5) can be supplemented by a coupling part (18) to form the closure point (5, 17, 18).

6. Rubber track chain segment according to one of the preceding claims,
wherein the extent in the longitudinal direction of the rubber track chain (3) of the less flexible regions (8) at the ends of the rubber track chain segment (1, 2) is dimensioned such that, in order to reduce the risk of breakage of the tensile members (4) in the region of the exit (19) of the tensile members (4) from the nipples, it is ensured that a course of the tensile members (4) through the less flexible regions (8) proceeding from the exit (19) from the nipples, before the tensile members (4) run through the adjacent flexible regions (9), is at least 20 times the tensile member diameter.

7. Rubber track chain segment according to Claim 6,
wherein it is ensured that a course of the tensile members (4) through the less flexible regions (8) proceeding from the exit (19) from the nipples is at least 25 times the tensile member diameter.

8. Rubber track chain segment according to Claim 7,
wherein it is ensured that a course of the tensile members (4) through the less flexible regions (8) proceeding from the exit (19) from the nipples is at least 30 times the tensile member diameter.

9. Rubber track chain segment according to one of the preceding claims,
which rubber track chain segment is suitable for running over a drive wheel (110) and over running wheels (120) of a track chain vehicle (100),
wherein the rubber track chain segment (1, 2) has an outer ground contact side (7) and an inner wheel contact side (6),
wherein the inner wheel contact side (6) has a planar surface (24), from which there project multiple guide horns (25) for the guidance of the rubber track chain (3) during the movement of the track chain vehicle (100),
wherein at least parts of the planar surface (24) serve as a running surface for the running wheels (120),
wherein, in the planar surface (24), there are provided depressions (26; 26A, 26B) for the engagement of drive lugs (111) of the drive wheel (110).

10. Rubber track chain segment according to Claim 9,
wherein the planar surface (24) extends over the entire width of the rubber track chain segment (1, 2).

11. Rubber track chain segment according to Claim 9 or 10,
wherein the rubber track chain segment (1, 2) has depressions in the form of holes (26A) which extend through the rubber track chain segment (1, 2) from the wheel contact side (6) to the ground contact side (7).

12. Rubber track chain segment according to one of Claims 9 to 11,
wherein the rubber track chain segment (1, 2) has depressions (26B) which do not extend through from the wheel contact side (6) to the ground contact side (7).

13. Rubber track chain segment according to Claim 12,
wherein the depressions (26B) are in the form of channels which are oriented perpendicular to the longitudinal axis of the rubber track chain segment (1, 2).

14. Rubber track chain segment according to Claim 13,
wherein the channels (26B) run through between the guide horns (5) over the entire width of the rubber track chain segment (1, 2).

15. Rubber track chain segment according to Claims 11 and 14,
wherein one or more holes (26A) at the level of the intermediate space between two guide horns (25) on one side adjacent to the central longitudinal axis of the rubber track chain segment (1, 2) are connected, by way of one of the channels (26B), to one or more holes (26A) at the level of the intermediate space between said two guide horns (25) on the other side adjacent to the central longitudinal axis of the rubber track chain segment (1, 2).

## Revendications

1. Segment de chenille en caoutchouc (1, 2) qui peut être raccordés, à ses extrémités, à d'autres segments chenille en caoutchouc (2) ou à lui-même (1) par le biais de moyens de liaison (5) pour former une chenille en caoutchouc (3) pouvant être segmentée, au moins un support de traction (4) étant inséré dans le segment de chenille en caoutchouc (1, 2) entre les moyens de liaison (5) pour augmenter la limite de charge à la traction, **caractérisé en ce que** des manchons filetés sont disposés aux extrémités des supports de traction (4) et sont destinés à être reçus dans une contre-dépouille des moyens de liaison (5), le segment de chenille en caoutchouc (1, 2) comportant alternativement des zones flexibles (9) et des zones moins flexibles (8), les extrémités des supports de traction (4) étant positionnées dans les zones moins flexibles (8) aux extrémités du segment de chenille en caoutchouc (1, 2) de telle sorte que les supports de traction (4) s'étendent à partir de la sortie (19) depuis les manchons filetés à travers les zones moins flexibles (8) sur une section (21) la plus longue possible avant de s'étendre à travers les zones flexibles (9) adjacentes.

2. Segment de chenille en caoutchouc selon la revendication 1, les manchons filetés étant moulés, forgés, pressés ou collés aux extrémités des supports de traction (4).

3. Segment de chenille en caoutchouc selon la revendication 1 ou 2, les manchons filetés étant conçus en forme de disque de telle sorte que leur épaisseur ne soit que légèrement supérieure au diamètre des supports de traction (4).

4. Segment de chenille en caoutchouc selon l'une des revendications 1 à 3, les moyens de liaison (5) étant conçus du côté opposé au côté de la sortie des supports de traction (4) de façon à former, par accouplement des moyens de liaison (5) de deux extrémités d'un segment de chenille en caoutchouc (1) ou de deux segments de chenille en caoutchouc (2), un point de fermeture (5, 17, 18) qui est dimensionné de manière à coïncider au moins géométriquement, de préférence également en termes de masse, aux zones flexibles (8) du segment de chenille en caoutchouc (1, 2).

5. Segment de chenille en caoutchouc selon la revendication 4, les moyens de liaison (5) formant eux-mêmes le point de fermeture (5, 17) ou les moyens de liaison (5) pouvant être complétés par une pièce d'accouplement (18) au point de fermeture (5, 17, 18).

6. Segment de chenille en caoutchouc selon l'une des revendications précédentes, l'extension des zones moins flexibles (8), aux extrémités du segment de chenille en caoutchouc (1, 2), dans la direction longitudinale de la chenille en caoutchouc (3) étant dimensionnée de manière à garantir que les supports de traction (4) s'étendent à travers les zones moins flexibles (8) à partir de la sortie (19) des manchons filetés sur au moins 20 fois le diamètre des supports de traction, avant que les supports de traction (4) ne s'étendent à travers les zones flexibles (9) adjacentes, afin de réduire le risque de rupture des supports de traction (4) dans la zone de la sortie (19) des supports de traction (4) des manchons filetés.

7. Segment de chenille en caoutchouc selon la revendication 6, une extension des supports de traction (4) à travers les zones moins flexibles (8) depuis la sortie (19) des manchons filetés sur au moins 25 fois le diamètre des supports de traction étant garantie.

8. Segment de chenille en caoutchouc selon la revendication 7, une extension des supports de traction (4) à travers les zones moins flexibles (8) depuis la sortie (19) des manchons filetés sur au moins 30 fois le diamètre des supports de traction étant garantie.

9. Segment de chenille en caoutchouc selon l'une des revendications précédentes, lequel est adapté pour rouler sur une roue d'entraînement (110) et sur des roues porteuses (120) d'un véhicule à chenilles (100), le segment de chenille en caoutchouc (1, 2) comportant un côté extérieur (7) de contact avec le sol et un côté intérieur (6) de contact avec les roues, le côté intérieur (6) de contact avec les roues comportant une surface plane (24) de laquelle font saillie une pluralité de cornes de guidage (25) destinées à guider la chenille en caoutchouc (3) pendant le déplacement du véhicule à chenilles (100), au moins des parties de la surface plane (24) servant de surface de portée aux roues porteuses (120), des creux (26 ; 26A, 26B) étant ménagés dans la surface plane (24) pour l'engagement d'ergots d'entraînement (111) de la roue d'entraînement (110).

10. Segment de chenille en caoutchouc selon la revendication 9, la surface plane (24) s'étendant sur toute la largeur du segment de chenille en caoutchouc (1, 2).

11. Segment de chenille en caoutchouc selon la revendication 9 ou 10, le segment de chenille en caoutchouc (1, 2) comportant des creux, se présentant sous la forme de trous (26A), qui sont ménagés à travers le segment de chenille en caoutchouc (1, 2) depuis le côté (6) en contact avec les roues jusqu'au côté (7) en contact avec le sol.

12. Segment de chenille en caoutchouc selon l'une des revendications 9 à 11, le segment de chenille en caoutchouc (1, 2) comportant des creux (26B) qui sont ménagés depuis le côté (6) en contact avec les roues sans aller jusqu'au côté (7) en contact avec le sol.

13. Segment de chenille en caoutchouc selon la revendication 12, les creux (26B) ayant la forme de canaux qui sont orientés perpendiculairement à l'axe longitudinal du segment de chenille en caoutchouc (1, 2).

14. Segment de chenille en caoutchouc selon la revendication 13, les canaux (26B) s'étendant entre les cornes de guidage (5) sur toute la largeur du segment de chenille en caoutchouc (1, 2).

15. Segment de chenille en caoutchouc selon les revendications 11 et 14, au moins un trou (26A) ménagé au niveau de l'espace intermédiaire situé entre deux cornes de guidage (25) sur l'un des côtés près de l'axe longitudinal central du segment de chenille en caoutchouc (1, 2) étant relié par le biais de l'un des canaux (26B) à au moins un trou (26A) ménagé au niveau de l'espace intermédiaire situé entre ces deux cornes de guidage (25) de l'autre côté près de l'axe longitudinal central du segment de chenille en caoutchouc (1, 2).
